# EUROPÄISCHE PATENTSCHRIFT

(11) **EP 1 537 314 B1**
(45) Veröffentlichungstag und Bekanntmachung des Hinweises auf die Patenterteilung: **27.03.2013**
(21) Anmeldenummer: 03793578.0
(22) Anmeldetag: 26.05.2003
(51) Int. Cl.: F02D 35/02, F02D 41/34

(54) **VERFAHREN ZUR KALIBRIERUNG DER ZYLINDERSENSORIK EINER ZYLINDERINDIVIDUELL BETRIEBENEN BRENNKRAFTMASCHINE INSBESONDERE EINES KRAFTFAHRZEUGES**
METHOD FOR CALIBRATION OF THE CYLINDER SENSORS ON AN INTERNAL COMBUSTION ENGINE WITH INDIVIDUAL CYLINDER OPERATION IN PARTICULAR IN A MOTOR VEHICLE
PROCEDE POUR CALIBRER LE SYSTEME DE DETECTION DES CYLINDRES D'UN MOTEUR A COMBUSTION INTERNE, NOTAMMENT D'UNE AUTOMOBILE, DONT LES CYLINDRES FONCTIONNENT DE FACON INDIVIDUELLE

(30) Priorität: 03.09.2002 DE 10240492
(43) Veröffentlichungstag der Anmeldung: 08.06.2005
(73) Patentinhaber: ROBERT BOSCH GMBH, 70442 Stuttgart (DE)
(72) Erfinder: DAMITZ, Jens, 75428 Illingen (DE); SAMUELSEN, Dirk, 71636 Ludwigsburg (DE); FEHRMANN, Ruediger, 71229 Leonberg (DE); SCHUELER, Matthias, 71638 Ludwigsburg (DE)
(86) Internationale Anmeldenummer: PCT/DE2003/001713
(87) Internationale Veröffentlichungsnummer: WO 2004/022951

(56) Entgegenhaltungen:
- EP-A- 0 115 317
- EP-A- 0 411 580
- EP-A- 0 416 270
- EP-A- 0 657 729
- WO-A-00/79113
- DE-A- 19 945 618
- US-A- 4 744 244

## Beschreibung

### STAND DER TECHNIK

Die Erfindung betrifft allgemein zylinderindividuell betriebene Brennkraftmaschinen insbesondere von Kraftfahrzeugen und im Besonderen ein Verfahren zur Kalibrierung von in wenigstens zwei Zylindern einer solchen Brennkraftmaschine angeordneten Sensoren zur Erfassung einer den Verbrennungsvorgang im jeweiligen Zylinder charakterisierenden Größe gemäß dem Oberbegriff des unabhängigen Anspruchs 1.

Zylinderindividuell betriebene Brennkraftmaschinen weisen häufig eine sogenannte Mengenausgleichsregelung (MAR) bzw. Laufruheregelung (LRR) auf, welche bspw. aus der DE 199 45 618 A1 hervorgeht. Hierzu ist jedem Zylinder der Brennkraftmaschine ein Regler zugeordnet. Hintergrund für diese Maßnahme ist, dass bei etwa auftretenden Mengenfehlern bei der Kraftstoffzumessung eine an sich unerwünschte Drehungleichförmigkeit auftritt. Wenn nun ein Zylinder aufgrund von Toleranzen eine erhöhte Kraftstoffmenge zumisst, so bewirkt die MAR, dass für diesen Zylinder eine negative Kraftstoffmenge zur Fahrerwunschmenge hinzuaddiert wird. Umgekehrt wird eine positive Kraftstoffmenge hinzuaddiert, wenn ein Zylinder eine zu geringe Kraftstoffmenge zumisst.

Mittels der beiden Regelungen MAR und LRR lassen sich im Betrieb eines Dieselmotors etwa auftretende Einspritzmengenfehler, die zu Momentenunterschieden und damit zu ungleichförmigen Motordrehzahlen führen, ausregeln und der bei Dieselmotoren bekanntermaßen kritische Motorkomfort im unteren Drehzahlbereich wesentlich verbessern. Weiterhin lassen sich mit der durch die Ausregelung herbeigeführten Gleichstellung der Zylinder nicht nur im unteren, komfortrelevanten Drehzahlbereich, sondern auch bei höheren Drehzahlen Emissionsverbesserungen erzielen.

Nun ist eine Mengengleichstellung mittels MAR oder LRR nicht in allen Betriebsbereichen eines Dieselmotors effizient, da motortypabhängig zusätzliche Effekte wie bspw. Torsionsschwingungen auf der Kurbelwelle auftreten, welche zudem stark drehzahlabhängig sind. Daher wurden auch Verfahren zum zylinderindividuellen Betrieb einer Brennkraftmaschine vorgeschlagen, bei denen eine direkte Auswertung eines mit der Verbrennung unmittelbar in Zusammenhang stehenden Signals, z.B. des Zylinderdruckes, erfolgt. Diese Verfahren ermöglichen eine Zylindergleichstellung auch bei höheren Drehzahlen. Bei diesen Verfahren werden aus dem Verlauf des Zylinderdruckes Betriebskenngrößen des Verbrennungsvorganges, bspw. der in den einzelnen Zylindern indizierte Mitteldruck bzw. das diesem entsprechende Moment oder die Schwerpunktlage des Differenzdruckes zwischen den einzelnen Zylindern, berechnet. So kann durch Regelung des indizierten Mitteldruckes eine präzisere, zylinderindividuelle Einregelung der Sollmomente und damit eine bessere Gleichstellung der Zylinder in allen Betriebsbereichen erzielt werden.

Bei zylinderdruckbasierten Motorsteuerungen werden die im Betrieb des Motors sich ergebenden Zylinderdrücke mittels Drucksensoren über der Zeit oder über den Kurbelwinkel gemessen und einer Motorsteuerung zur Verfügung gestellt. Ein derartiger Drucksensor geht bspw. aus der DE 197 49 814 A1 hervor. Weiter sind Verfahren bekannt, mit denen aus einem hochaufgelösten Drucksignal während des Motorbetriebes Kenngrößen ermittelt werden, die dann wiederum zur zylinderindividuellen Optimierung des Motorprozesses im Hinblick auf die Zielgrößen Verbrauch, Emission und Komfort benutzt werden. Als Kenngrößen werden bspw. der Druck oder Druckdifferenzintegrale, die indizierte Arbeit oder das indizierte Moment verwendet.

Ferner ist in der unveröffentlichten deutschen Patentanmeldung mit dem Aktenzeichen 101 59 017 ein ähnliches Verfahren offenbart, bei dem die Steuerung und/oder Regelung von Motorbetriebskenngrößen abhängig von einer von dem eigentlichen Drucksignal abgeleiteten Größen erfolgt. Diese abgeleitete Größe charakterisiert bspw. die Änderung des Drucksignals oder den Verlauf der Verbrennung. Dadurch wird eine sehr genaue Korrektur der Voreinspritzung während des Motorbetriebes ermöglicht.

Die genannte zylinderindividuelle Steuerung erfolgt üblicherweise mittels in bzw. an den Zylindern angeordneten Stellern, welche durch zylinderindividuelle Stellgrößen angesteuert werden. Bei diesen Stellgrößen handelt es sich bspw. um die Ansteuerdauern und/oder Ansteuerbeginne einer Einspritzung.

Die zylinderdruckbasierten Verfahren haben den Nachteil, dass die von den Drucksensoren gelieferten Messwerte aufgrund von fertigungs- und/oder betriebsbedingten Toleranzen häufig fehlerbehaftet sind. Werden diese Messfehler nicht korrigiert, verfälschen sie die berechneten Zylinderdruckwerte und bewirken aufgrund der genannten Regelung im Ergebnis eine Verstimmung der einzelnen Zylinder untereinander.

Die genannten Messfehler äußern sich in unterschiedlichen Sensorkenngrößen, welche in Sensorkennlinien bevorzugt sowohl als fehlerbehafteter Offset als auch als fehlerbehafteter Verstärkungsfaktor einfließen. Zur Kalibrierung bzw. Korrektur des Offset existieren bereits Lösungsansätze, bei denen der Druckanstieg zu Beginn einer Kompressionsphase der Brennkraftmaschine ausgewertet wird. Allerdings existieren bislang keine Verfahren zur Kalibrierung bzw. Korrektur etwa fehlerbehafteter Verstärkungsfaktoren. Die einzelnen Verstärkungsfaktoren spielen zudem eine übergeordnete Rolle für den gesamten Betrieb einer Brennkraftmaschine, da sie bei der Berechnung auch vieler anderer Zylinderdruckmerkmale unmittelbar einfließen.

Aus der EP 0 411 580 A1 ist ein Verfahren zur Kalibrierung von Brennraumdrucksensoren bekannt. Die Kalibrierung des Offsetfehlers der Sensorsignale erfolgt in einem Betriebszustand ohne Verbrennung.

### AUFGABE DER ERFINDUNG

Der vorliegenden Erfindung liegt deshalb die Aufgabe zugrunde, ein eingangs genanntes Verfahren zur Kalibrierung von in wenigstens zwei Zylindern einer zylinderindividuell betriebenen Brennkraftmaschine angeordneten Sensoren zur Erfassung einer den Verbrennungsvorgang im jeweiligen Zylinder charakterisierenden Größe bereitzustellen, welches einen Abgleich der wenigstens zwei Sensoren mit hoher Präzision ermöglicht.

### VORTEILE DER ERFINDUNG

Die genannte Aufgabe wird gelöst durch die Merkmale des unabhängigen Verfahrensanspruchs. Vorteilhafte Ausgestaltungen sind Gegenstand der Unteransprüche.

Das erfindungsgemäße Verfahren sieht in einem ersten Schritt vor, zur Durchführung des genannten Sensorabgleichs zunächst wenigstens einen Betriebspunkt der Brennkraftmaschine anzufahren, in dem eine Gleichstellung der Zylinder in dem o.g. Sinne mit den eingangs genannten Mengengleichstellungsverfahren wie bspw. der MAR oder der LRR mit relativ hoher Präzision möglich ist. In diesem Betriebspunkt wird dann eine Gleichstellung der Zylinder mittels wenigstens eines der genannten Mengengleichstellungsverfahren durchgeführt.

In einer vorteilhaften Ausgestaltung können dabei solche Betriebspunkte der Brennkraftmaschine ausgewählt werden, in denen nur geringe störende Nebeneffekte wie die bereits erwähnten Torsionsschwingungen der Kurbelwelle oder eine ungleiche Brennraum-/Zylinderfüllung aufgrund von Luftmassenschwingungen zu erwarten sind. Ein bevorzugter solcher Betriebspunkt ist der Leerlaufbetrieb.

Dem ersten erfindungsgemäßen Schritt liegt die Erkenntnis zugrunde, dass bei einer Gleichstellung der Zylinder mittels eines genannten Mengengleichstellungsverfahrens davon ausgegangen werden kann, dass alle Zylinder die gleiche Einspritzmenge bekommen und daher das gleiche Moment bzw. den gleichen Mitteldruck liefern.

In einem zweiten Schritt wird die im ersten Schritt erlangte Gleichstellung ausgenutzt, um wenigstens eine der genannten Sensorkenngrößen wenigstens zweier Drucksensoren gegeneinander abzugleichen. Hierbei wird sich zunutze gemacht, dass die im ersten Schritt im Betrieb der Brennkraftmaschine in unterschiedlichen Zylindern sich ergebenden Verhältnisse des Verbrennungsvorganges, bevorzugt des Zylinderinnendruckes (Mitteldrucks) oder des Momentes, in erster Näherung gleich sind und somit Abweichungen der von den Sensoren jeweils erfassten Betriebskenngrößen der Brennkraftmaschine in erster Näherung ausschließlich aus fehlerbehafteten Sensorkenngrößen, insbesondere dem Verstärkungsfaktor und/oder dem Offset, herrühren.

Mit dem vorteilhaft im Betrieb der Brennkraftmaschine durchführbaren Abgleich lassen sich demnach fehlerbehaftete Sensorkenngrößen/-linien technisch einfach, jedoch äusserst effizient und präzise korrigieren bzw. kalibrieren und somit eine mögliche Verstimmung der verschiedenen Zylinder der Brennkraftmaschine wirksam vermeiden.

Bei den hier betroffenen Sensoren handelt es sich bevorzugt um Drucksensoren zur Erfassung des bei der Verbrennung auftretenden Zylinderinnendruckes (Mitteldrucks) und damit indirekt des durch die Verbrennung indizierten Momentes.

Im Ergebnis werden mittels des erfindungsgemäßen Verfahrens durch die Korrektur des Verstärkungsfaktors und/oder des Offsets einzelner Sensoren die Druckverläufe in den Zylindern und die berechneten Betriebskenngrößen der Brennkraftmaschine aneinander angepasst. Das Verfahren ermöglicht zwar keine absolute Kalibrierung der Sensoren, jedoch einen relativen Abgleich der Sensoren untereinander, wodurch der zylinderindividuelle Betrieb der Brennkraftmaschine insgesamt verbessert wird.

### ZEICHNUNG

Die Erfindung wird nachfolgend, unter Heranziehung der Zeichnung, anhand bevorzugter Ausführungsbeispiele eingehender erläutert, aus denen sich weitere Merkmale und Vorteile der Erfindung ergeben.

In der Zeichnung zeigen
- Fig. 1: ein erstes Ausführungsbeispiel des erfindungsgemäßen Kalibrierungsverfahrens anhand eines Flussdiagrammes;
- Fig. 2: ebenfalls anhand eines Flussdiagrammes, ein zweites Ausführungsbeispiel der Erfindung; und
- Fig. 3: nach einer Zylindergleichstellung mittels MAR/LRR bei einer vier Zylinder aufweisenden Brennkraftmaschine typischerweise vorliegende Sensorkennlinien.

### BESCHREIBUNG DER AUSFÜHRUNGSBEISPIELE

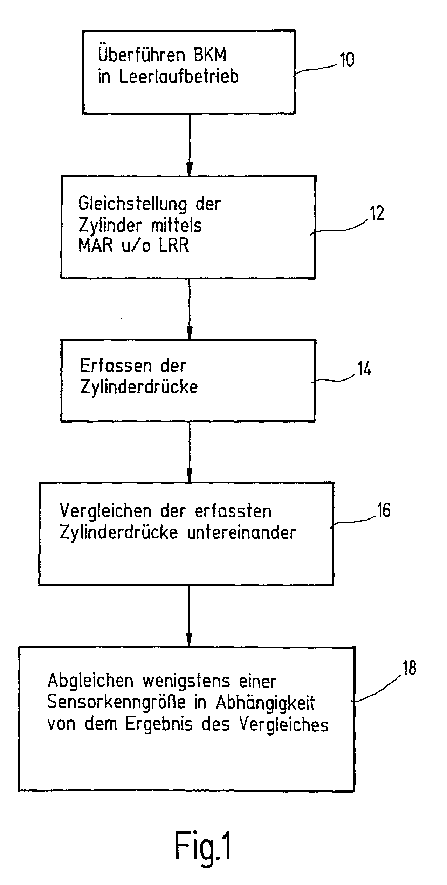

Die Fig. 1 zeigt ein erstes Ausführungsbeispiel einer erfindungsgemäßen Routine zur Kalibrierung von in den Zylindern (Brennräumen) einer Brennkraftmaschine (BKM) eines Kraftfahrzeuges angeordneten Drucksensoren, anhand dessen das Grundkonzept der Erfindung illustriert werden soll.

Die gezeigte Routine startet damit, dass die BKM gemäß Schritt 10 in einen Betriebszustand übergeführt wird, in dem eine sehr hohe Genauigkeit einer Zylindergleichstellung mittels einer Mengenausgleichsregelung (MAR) und/oder einer Laufruhenregelung (LRR) erreichbar ist. Diese Überführung geschieht in an sich bekannter Weise mittels einer elektronischen Motorsteuerung. Einen solchen Betriebszustand stellt vorliegend der lastfreie Betrieb der BKM mit der Leerlaufdrehzahl (Leerlaufbetrieb) dar, da in diesem Betriebszustand für die MAR und/oder LRR störende Nebeneffekte wie bspw. Kurbelwellentorsionsschwingungen oder Luftmassenschwingungen minimiert sind.

Im Leerlaufbetrieb wird nun gemäß Schritt 12 in an sich bekannter Weise eine Gleichstellung der einzelnen Zylinder der BKM mittels der MAR und/oder LRR durchgeführt. Durch diese Gleichstellung wird erreicht, dass alle Zylinder den gleichen effektiven Mitteldruck pme liefern. Betrachtet man nun den Reibmitteldruck pmR vereinfachend für alle Zylinder als gleich, so ergibt sich für alle Zylinder der gleiche indizierte Mitteldruck pmi, der sich aus einem effektiven Mitteldruck pme und dem Reibmitteldruck gemäß der Beziehung pmi = pme + pmR zusammensetzt. Der indizierte Mitteldruck pmi lässt sich zudem in an sich bekannter Weise aus dem jeweiligen Zylinderdruck berechnen. Daher können Unterschiede in den berechneten pmi-Werten der verschiedenen Zylinder nur auf fehlerbehaftete Sensorkennlinien, insbesondere auf einen fehlerhaften Verstärkungsfaktor, zurückgeführt werden. Zusätzlich kann auch ein Offset der Sensorkennlinien eine solche Abweichung zumindest teilweise mitverursachen.

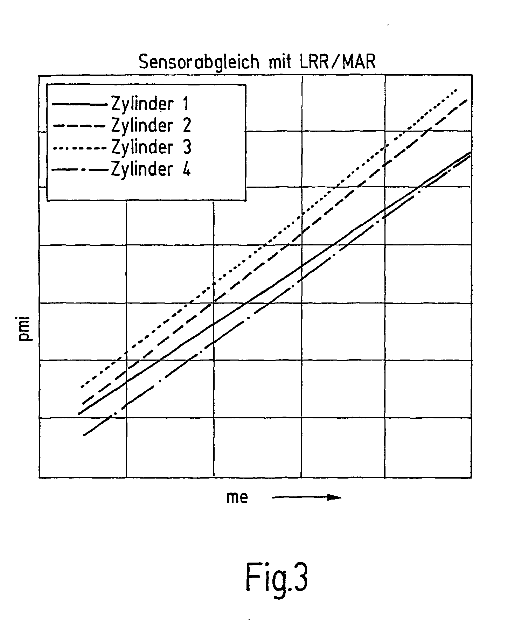

Es ist dabei anzumerken, dass die eingangs beschriebene, im Stand der Technik an sich bekannte Korrektur des Offsetwertes auf die Sensorkennlinie U = f(p) bezogen ist. Im Gegensatz dazu bezieht sich die in der Fig. 3 gezeigte Offset-Korrektur auf die Kennlinie der Kenngrößen pmi = f(me). Ein Offset-Fehler in der Sensorkennlinie U = f(p) wirkt sich nicht auf den berechneten pmi-Wert aus. Offset-Abweichungen in den Kennlinien pmi = f(me) beruhen dagegen nicht auf Sensorfehlern, sondern auf Unterschieden im Reibmitteldruck, wobei vorauszusetzen ist, dass ein idealer Ausgleich der effektiven Mitteldrücke durchführbar ist und die genannten Steigungen bereits abgeglichen worden sind.

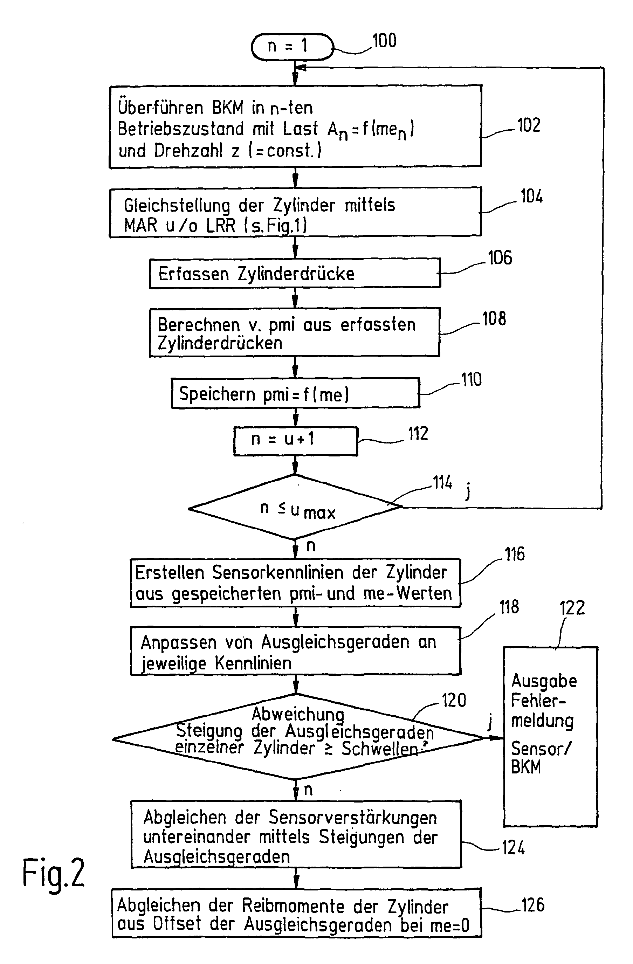

In dem vorliegenden Ausführungsbeispiel werden die in Schritt 14 erfassten Zylinderdruckverläufe selbst verglichen 16 und mit dem Ergebnis dieses Vergleichs die einzelnen Sennsorkenngrößen untereinander abgeglichen 18. Alternativ lassen sich auch andere Betriebskenngrößen der BKM zum Abgleich der Sensorkenngrößen/-linien nutzen. Wie in der Fig. 2 illustriert, kann der Abgleich auch durch Gleichsetzung der genannten berechneten pmi-Werte erfolgen.

Es ist anzumerken, dass in dem vorbeschriebenen Ausführungsbeispiel der Abgleich technisch vereinfachend in nur einem einzigen Betriebspunkt der BKM erfolgt, wohingegen bei dem in der Fig. 2 dargestellten Ausführungsbeispiel wenigstens zwei Betriebspunkte angefahren werden müssen. Die letztere Variante ermöglicht indes eine höhere Kalibriergüte. Bei dem in Fig. 1 illustrierten Ausführungsbeispiel kann allerdings zur Reduzierung des Einflusses von Hub-zu-Hub-Streuungen in den Zylindern der BKM zusätzlich eine Filterung, z.B. Mittelung über mehrere Betriebszyklen der BKM, vorgesehen sein.

In der Fig. 2 ist ein zweites Ausführungsbeispiel dargestellt, bei dem die Sensorkennlinien in mehreren Betriebspunkten der BKM, d.h. vorliegend bei mehreren Lasten bei konstanter Drehzahl, abgeglichen werden. Durch Berücksichtigung des genannten Offsets in den Sensorkennlinien lassen sich unterschiedliche Reibmomente bzw. Reibmitteldrücke pmR der einzelnen Zylinder berücksichtigen, welche z.B. auf unterschiedliche Kompressionsverhältnisse in den einzelnen Zylindern zurückzuführen sind.

Die in Fig. 2 dargestellte Prozedur startet in Schritt 100 damit, dass ein Zähler n = 1 initiiert wird. In Schritt 102 wird die BKM in einen n-ten Betriebszustand, d.h. vorliegend zunächst in einen 1-ten Betriebszustand übergeführt. Dieser erste Betriebszustand ist durch eine von der Einspritzmenge me an diesem Betriebspunkt (me1) abhängige Last und eine im Folgenden als konstant angenommene Drehzahl z charakterisiert. In diesem ersten Betriebspunkt der BKM erfolgt in Schritt 104 eine Gleichstellung der Zylinder untereinander mittels MAR/LRR, wie anhand der Fig. 1 beschrieben. Nach erfolgter Gleichstellung der Zylinder werden mittels der Drucksensoren die in den Zylindern vorliegenden Drücke erfasst 106 und aus den erfassten Druckwerten die in den Zylindern jeweils indizierten Momente bzw. Mitteldrücke pmi berechnet 108.

Das nun vorliegende Zahlentupel (pmi, me) wird nun zwischengespeichert 110. Daraufhin wird der Zähler n um 1 inkrementiert 112 und geprüft 114, ob der inkrementierte Wert von n kleiner als eine obere Grenze n_max ist. In Abhängigkeit von dem Ergebnis dieses Vergleichs wird entweder zu Schritt 201 zurückgesprungen oder weiterverfahren. Die Grenze n_max gibt demnach vor, wie oft die Schleife 102 - 110 wiederholt wird, d.h. wie viele verschiedene Betriebspunkte der BKM angefahren werden (Last A2 bei me2, Last A3 bei me3, etc.) und wie viele der genannten Zahlentupel zwischengespeichert werden.

Ist die obere Grenze n_max überschritten, werden aus den zwischengespeicherten Zahlentupeln (pmi, me) Sensorkennlinien (Fig. 3) für die einzelnen Zylinder erstellt 116. An die einzelnen Messpunkte der Kennlinien werden mittels der Methode der kleinsten Fehlerquadrate Ausgleichsgeraden angepasst 118. In Schritt 120 werden die Steigungen dieser Ausgleichsgeraden miteinander verglichen und jeweils Abweichungen zwischen diesen berechnet. Ist wenigstens eine dieser Abweichungen größer als ein empirisch zu ermittelnder Schwellenwert, erfolgt in dem vorliegenden Ausführungsbeispiel Ausgabe einer Fehlermeldung 122 hinsichtlich der Funktion der Sensorik und/oder der BKM selbst. Der Schritt 122 ist nur optional.

Geht man hierbei in erster Näherung von einem konstanten Reibmoment bzw. Reibmitteldruck pmR in den einzelnen Zylindern aus, so lässt sich die Sensorverstärkung als Steigung der Ausgleichsgeraden interpretieren. Als konstantes Reibmoment bzw. Reibmitteldruck pmR ergibt sich dann der Offset der Ausgleichsgeraden für me = 0.

Ist der genannte Schwellenwert unterschritten, kann ein Abgleich der Sensorkenngrößen erfolgen. In Schritt 124 werden die Verstärkungsfaktoren der einzelnen Drucksensoren untereinander mittels Anpassung der Steigungen der Ausgleichsgeraden abgeglichen. Durch die Kurven- bzw. Geradenanpassung 126 wird mittels des genannten Offsets der Ausgleichsgeraden automatisch auch ein Abgleich der Reibmomente bzw. Reibmitteldrücke der Zylinder untereinander vorgenommen 126.

Alternativ zu dem vorbeschriebenen linearen Funktionsansatz pmi = f(me) für die Sensorkennlinien können auch polynomiale Funktionen höherer Ordnung zugrundegelegt werden. Dadurch lässt sich insbesondere ein über der Last veränderliches Reibmoment bzw. Reibmitteldruck pmR berücksichtigen.

In einer weiteren, hier nicht figürlich dargestellten Verfahrensvariante wird zusätzlich eine Plausibilisierung der ermittelten Sensorkenngrößen, insbesondere der ermittelten Verstärkungsfaktoren, durchgeführt. Dadurch wird zusätzlich ermöglicht, ähnlich wie in Schritt 122 in der Fig. 2, mögliche Funktionsdefekte an einem oder mehreren der Drucksensoren oder sogar Defekte an der BKM selbst zu detektieren, jedoch mit einer gegenüber Fig. 2 höheren Güte.

Schließlich zeigt die Fig. 3 nach einer Zylindergleichstellung mittels MAR und LRR sich typischerweise ergebende Sensorkennlinien. Hierbei ist das aus den in jedem Zylinder erfassten Druckwerten berechnete indizierte Moment bzw. Mitteldruck pmi über der in drei unterschiedlichen Betriebspunkten der BKM gemessenen Einspritzmenge me aufgetragen. An die Messpunkte wurden mittels der Methode der kleinsten Fehlerquadrate bereits Ausgleichsgeraden angepasst. Aus der Steigung dieser Geraden ergibt sich unmittelbar der Verstärkungsfaktor der jeweiligen Drucksensoren. Wie zu ersehen weicht eine der drei Kennlinien in ihrer Steigung von den übrigen Kennlinien sichtbar ab. Gerade bei dieser Kennlinie führt ein Abgleich nach dem obigen Verfahren zu einer deutlich verbesserten Kalibrierung der Sensoren untereinander.

Es versteht sich, dass die grundlegenden Konzepte der Erfindung nicht nur bei BKMs mit zylinderförmig ausgebildeten Brennräumen anwendbar sind, sondern bei wenigstens zwei Brennräume aufweisenden BKMs jeglicher Art, wie bspw. Wankelmotoren. Ferner wird hier verstanden, dass die Erfindung nicht nur bei den vorbeschriebenen Drucksensoren, sondern grds. bei sämtlichen zum zylinderindividuellen Betrieb der BKM benötigten, d.h. zur Erfassung einer den Verbrennungsvorgang in den Zylindern unmittelbar oder mittelbar charakterisierenden Größe geeigneten Sensoren wie bspw. Einspritzmengensensoren oder dgl., einsetzbar ist.

## Patentansprüche

1. Verfahren zur Kalibrierung wenigstens zweier Sensoren zur Erfassung einer den Verbrennungsvorgang in einer wenigstens zwei Zylinder aufweisenden, zylinderindividuell betriebenen Brennkraftmaschine eines Kraftfahrzeuges charakterisierenden Größe, wobei wenigstens ein Betriebspunkt der Brennkraftmaschine angefahren wird (10), in dem eine Gleichstellung der wenigstens zwei Zylinder mittels wenigstens eines Mengengleichstellungsverfahrens mit hoher Genauigkeit durchführbar ist, **dadurch gekennzeichnet, dass** es sich bei dem wenigstens einen Betriebspunkt der Brennkraftmaschine um den Leerlauf handelt, und dass im Leerlauf eine Gleichstellung der wenigstens zwei Zylinder mittels des wenigstens einen Mengengleichstellungsverfahrens durchgeführt wird (12) und dass nach erfolgter Gleichstellung der wenigstens zwei Zylinder wenigstens eine Sensorkenngröße der wenigstens zwei Sensoren gegeneinander abgeglichen wird (18), wobei es sich bei dem wenigstens einen Betriebszustand um den Leerlauf handelt.

2. Verfahren nach Anspruch 1, **dadurch gekennzeichnet, dass** die den Verbrennungsvorgang im jeweiligen Zylinder charakterisierende Größe durch den Druck repräsentiert wird.

3. Verfahren nach Anspruch 1 oder 2, **dadurch gekennzeichnet, dass** als Sensorkenngröße ein Offset und/oder ein Verstärkungsfaktor einer Sensorkennlinie abgeglichen wird.

4. Verfahren nach einem der vorhergehenden Ansprüche, **dadurch gekennzeichnet, dass** für den Abgleich der wenigstens einen Sensorkenngröße Betriebspunkte der Brennkraftmaschine ausgewählt werden, in denen geringe Störeffekte durch den Betrieb der Brennkraftmaschine zu erwarten sind.

5. Verfahren nach einem der vorhergehenden Ansprüche, **dadurch gekennzeichnet, dass** aus von den wenigstens zwei Sensoren erfassten Größen das in dem jeweiligen Zylinder indizierte Moment oder der in dem jeweiligen Zylinder indizierte Mitteldruck berechnet wird und aus Unterschieden zwischen den in den wenigstens zwei Zylindern indizierten Momenten oder Mitteldrücken auf eine fehlerhafte Sensorkenngröße bzw. Sensorkennlinie geschlossen wird.

6. Verfahren nach Anspruch 5, **dadurch gekennzeichnet, dass** der Abgleich der wenigstens einen Sensorkenngröße durch Gleichsetzung der in den wenigstens zwei Zylindern berechneten indizierten Momente oder Mitteldrücke erfolgt.

7. Verfahren nach Anspruch 5, **dadurch gekennzeichnet, dass** der Abgleich der wenigstens einen Sensorkenngröße mittels der wenigstens einen Betriebskenngröße erfolgt (16).

8. Verfahren nach Anspruch 6 oder 7, **dadurch gekennzeichnet, dass** der Abgleich in einem einzigen Betriebspunkt der Brennkraftmaschine durchgeführt wird.

9. Verfahren nach Anspruch 8, **dadurch gekennzeichnet, dass** eine Filterung, insbesondere eine Mittelung, über wenigstens zwei Betriebszyklen der Brennkraftmaschine durchgeführt wird.

10. Verfahren nach einem der vorhergehenden Ansprüche, **dadurch gekennzeichnet, dass** der Abgleich in wenigstens zwei Betriebspunkten der Brennkraftmaschine durchgeführt wird.

11. Verfahren nach Anspruch 10, **dadurch gekennzeichnet, dass** der Abgleich der wenigstens zwei Sensorkenngrößen in wenigstens zwei Lastpunkten bei jeweils konstanter Drehzahl der Brennkraftmaschine erfolgt.

12. Verfahren nach Anspruch 10, soweit auf Anspruch 5 rückbezogen, **dadurch gekennzeichnet, dass** das indizierte Moment oder der indizierte Mitteldruck aus der Summe eines effektiven Moments oder eines effektiven Mitteldrucks, und eines Reibmoments oder eines Reibmitteldrucks, gebildet wird, wobei das Reibmoment oder der Reibmitteldruck für die wenigstens zwei Zylinder in erster Näherung als konstant angenommen wird und wobei der jeweilige Verstärkungsfaktor aus der Steigung einer Ausgleichsgeraden (Kennlinie) durch die mittels verschiedener Kraftstoffzumessmengen berechneten Werte der indizierten Momente oder der indizierten Mitteldrücke und der Offset durch das Reibmoment oder den Reibmitteldruck gebildet werden.

13. Verfahren nach Anspruch 12, **dadurch gekennzeichnet, dass** aus einer Abweichung von in den wenigstens zwei Zylindern ermittelten Ausgleichsgeraden (Kennlinien) untereinander auf eine Fehlfunktion des jeweiligen Sensors und/oder der Brennkraftmaschine geschlossen wird.

14. Verfahren nach einem der Ansprüche 1 bis 11, **dadurch gekennzeichnet, dass** das indizierte Moment oder der indizierte Mitteldruck aus einem durch ein effektives Moment oder einen effektiven Mitteldruck, und ein Reibmoment oder einen Reibmitteldruck, gebildetes Polynom berechnet wird, wobei der jeweilige Verstärkungsfaktor aus einer rechnerischen Kurvenangleichung des über verschiedene Kraftstoffzumessmengen berechneten indizierten Moments oder indizierten Mitteldrucks gebildet wird.

15. Verfahren nach Anspruch 14, **dadurch gekennzeichnet, dass** ein über die Last der Brennkraftmaschine veränderliches Reibmoment oder ein über die Last der Brennkraftmaschine veränderlicher Reibmitteldruck zugrunde gelegt wird.

16. Verfahren nach einem der vorhergehenden Ansprüche, **dadurch gekennzeichnet, dass** eine Plausibilisierung der in den wenigstens zwei Zylindern erfassten Sensorkenngrößen vorgenommen wird.

## Claims

1. Method for calibrating at least two sensors for acquiring a variable which characterizes the combustion process in an internal combustion engine of a motor vehicle which has at least two cylinders and is operated on a cylinder-specific basis, wherein at least one operating point of the internal combustion engine at which equalization of the at least two cylinders can be carried out with high accuracy by means of at least one quantity-equalization method is approached (10), **characterized in that** the at least one operating point of the internal combustion engine is the idling mode, and **in that** in the idling mode the at least two cylinders are equalized (12) by means of the at least one quantity-equalization method, and **in that** after equalization of the at least two cylinders has taken place the at least two sensors are adjusted with respect to one another (18) for at least one sensor characteristic variable, wherein the at least one operating state is the idling mode.

2. Method according to Claim 1, **characterized in that** the variable which characterizes the combustion process in the respective cylinder is represented by the pressure.

3. Method according to Claim 1 or 2, **characterized in that** an offset and/or a gain factor of a sensor characteristic curve is adjusted as sensor characteristic variable.

4. Method according to one of the preceding claims, **characterized in that** operating points of the internal combustion engine at which small interference effects are to be expected as a result of the operation of the internal combustion engine are selected for the adjustment of the at least one sensor characteristic variable.

5. Method according to one of the preceding claims, **characterized in that** the torque indicated in the respective cylinder or the mean pressure indicated in the respective cylinder are calculated from the variables acquired from the at least two sensors, and a faulty sensor characteristic variable or sensor characteristic curve is inferred from differences between the torques or mean pressures indicated in the at least two cylinders.

6. Method according to Claim 5, **characterized in that** the adjustment of the at least one sensor characteristic variable is carried out by equalizing the indicated torques or mean pressures calculated in the at least two cylinders.

7. Method according to Claim 5, **characterized in that** the adjustment of the at least one sensor characteristic variable is carried out (16) by means of the at least one operating characteristic variable.

8. Method according to Claim 6 or 7, **characterized in that** the adjustment is carried out at a single operating point of the internal combustion engine.

9. Method according to Claim 8, **characterized in that** filtering, in particular averaging, is carried out over at least two operating cycles of the internal combustion engine.

10. Method according to one of the preceding claims, **characterized in that** the adjustment is carried out at at least two operating points of the internal combustion engine.

11. Method according to Claim 10, **characterized in that** the adjustment of the at least two sensor characteristic variables is carried out at at least two load points with a respectively constant rotational speed of the internal combustion engine.

12. Method according to Claim 10, when referred back to Claim 5, **characterized in that** the indicated torque or the indicated mean pressure is formed from the sum of an effective torque or an effective mean pressure and a frictional torque or a mean friction effective pressure, wherein the frictional torque or the mean friction effective pressure for the at least two cylinders is assumed to be constant in a first approximation, and where the respective gain factor is formed from the gradient of a compensation line (characteristic curve) through the values, calculated by means of various fuel-metering quantities, of the indicated torques or of the indicated mean pressures, and the offset is formed by the frictional torque or the mean friction effective pressure.

13. Method according to Claim 12, **characterized in that** a malfunction of the respective sensor and/or of the internal combustion engine is inferred from a deviation between compensation lines (characteristic curves) determined in the at least two cylinders.

14. Method according to one of Claims 1 to 11, **characterized in that** the indicated torque or the indicated mean pressure is calculated from a polynomial formed by means of an effective torque or an effective mean pressure and a frictional torque or a mean friction effective pressure, wherein the respective gain factor is formed from a computational curve approximation of the indicated torque or indicated mean pressure calculated over various fuel-metering quantities.

15. Method according to Claim 14, **characterized in that** a frictional torque which can vary over the load of the internal combustion engine or a mean friction effective pressure which can vary over the load of the internal combustion engine is used as the basis.

16. Method according to one of the preceding claims, **characterized in that** plausibility checking of the sensor characteristic variables acquired in the at least two cylinders is performed.

## Revendications

1. Procédé d'étalonnage d'au moins deux détecteurs servant à saisir une grandeur qui caractérise le processus de combustion dans un moteur à combustion interne de véhicule automobile qui présente au moins deux cylindres utilisés indépendamment,
le moteur à combustion interne étant amené (10) à au moins un point de fonctionnement auquel une égalisation du fonctionnement des deux ou plusieurs cylindres peut être réalisée au moyen d'au moins un procédé d'égalisation de quantité à haute précision, **caractérisé en ce que**
le ou les points de fonctionnement du moteur à combustion interne correspondent au régime de ralenti,
**en ce qu'**au ralenti, une égalisation des deux ou plusieurs cylindres est réalisée (12) au moyen du ou des procédés d'égalisation de quantité et
**en ce que** lorsque les deux ou plusieurs cylindres ont été égalisés, au moins une grandeur caractéristique des deux ou plusieurs détecteurs est égalisée (18), le ou les points de fonctionnement constituant le régime de ralenti.

2. Procédé selon la revendication 1, **caractérisé en ce que** la grandeur qui caractérise le processus de combustion dans chaque cylindre est représentée par la pression.

3. Procédé selon les revendications 1 ou 2, **caractérisé en ce que** la grandeur caractéristique du détecteur qui est égalisée est le décalage et/ou un facteur d'amplification d'une ligne caractéristique du détecteur.

4. Procédé selon l'une des revendications précédentes, **caractérisé en ce que** pour égaliser la ou les grandeurs caractéristiques du détecteur, on sélectionne des points de fonctionnement du moteur à combustion interne auxquels on peut s'attendre à ce que le fonctionnement du moteur à combustion interne entraîne peu d'effets perturbateurs.

5. Procédé selon l'une des revendications précédentes, **caractérisé en ce qu'**à partir des grandeurs saisies par les deux ou plusieurs détecteurs, le couple d'indicateur dans le cylindre concerné ou la pression moyenne d'indicateur dans le cylindre concerné sont calculés, une différence entre les couples d'indicateur ou les pressions moyennes d'indicateur dans les deux ou plusieurs cylindres permettant de conclure que la grandeur caractéristique ou la ligne caractéristique du détecteur sont entachées d'erreurs.

6. Procédé selon la revendication 5, **caractérisé en ce que** l'égalisation de la ou des grandeurs caractéristiques de détecteur s'effectue en égalisant dans les deux ou plusieurs détecteurs les couples d'indicateur ou les pressions moyennes d'indicateur calculés.

7. Procédé selon la revendication 5, **caractérisé en ce que** l'égalisation de la ou des grandeurs caractéristiques de détecteur s'effectue (16) au moyen de la ou des grandeurs caractéristiques de fonctionnement.

8. Procédé selon les revendications 6 ou 7, **caractérisé en ce que** l'égalisation est réalisée en un seul point de fonctionnement du moteur à combustion interne.

9. Procédé selon la revendication 8, **caractérisé en ce qu'**un filtrage et en particulier la formation de la moyenne sont exécutés sur au moins deux cycles de fonctionnement du moteur à combustion interne.

10. Procédé selon l'une des revendications précédentes, **caractérisé en ce que** l'égalisation est réalisée en au moins deux points de fonctionnement du moteur à combustion interne.

11. Procédé selon la revendication 10, **caractérisé en ce que** l'égalisation des deux ou plusieurs grandeurs caractéristiques de détecteur s'effectue en au moins deux points de charge à des régimes de rotation constants du moteur à combustion interne.

12. Procédé selon la revendication 10 ainsi que selon la revendication 5, **caractérisé en ce que** le couple d'indicateur ou la pression moyenne d'indicateur sont formés de la somme du couple effectif ou de la pression moyenne effective et du couple de frottement ou de la pression moyenne de frottement, le couple de frottement ou la pression moyenne de frottement des deux ou plusieurs cylindres étant supposés constants en première approximation, le facteur d'amplification respectif étant formé de la pente d'une droite de compensation (ligne caractéristique) passant par les valeurs des couples d'indicateur ou des pressions moyennes d'indicateur calculés au moyen de différentes quantités d'apport de carburant et le décalage par le couple de frottement ou la pression moyenne de frottement.

13. Procédé selon la revendication 12, **caractérisé en ce qu'**un écart entre les droites de compensation (lignes caractéristiques) déterminées dans les deux ou plusieurs cylindres permet de conclure à la présence d'un fonctionnement défectueux du détecteur concerné et/ou du moteur à combustion interne concerné.

14. Procédé selon l'une des revendications 1 à 11, **caractérisé en ce que** le couple d'indicateur ou la pression moyenne d'indicateur sont calculés à partir d'un polynôme formé par le couple effectif ou la pression moyenne effective et un couple de frottement ou une pression moyenne de frottement, le facteur d'amplification étant formé en lissant par calcul les courbes du couple d'indicateur ou de la pression moyenne d'indicateur calculées sur différentes quantités d'apport de carburant.

15. Procédé selon la revendication 14, **caractérisé en ce qu'**il est basé sur un couple de frottement qui varie en fonction de la charge du moteur à combustion interne ou une pression moyenne de frottement qui varie en fonction de la charge du moteur à combustion interne.

16. Procédé selon l'une des revendications précédentes, **caractérisé en ce qu'**une plausibilisation des grandeurs caractéristiques de détecteur saisies dans les deux ou plusieurs cylindre est réalisée.
